# EUROPÄISCHE PATENTANMELDUNG

(11) **EP 3 686 056 A1**
(43) Veröffentlichungstag der Anmeldung: **29.07.2020**
(21) Anmeldenummer: 20152453.5
(22) Anmeldetag: 17.01.2020
(51) Int. Cl.: B60Q 1/30, B60Q 1/22, B60T 13/66

(54) **VERKABELUNG UND ANSTEUERUNGSMODUL FÜR EIN ANHÄNGEFAHRZEUG**

(30) Priorität: 25.01.2019 DE 102019101889
(71) Anmelder: WABCO GmbH, 30453 Hannover (DE)
(72) Erfinder: RISSE, Rainer, 30982 Pattensen-Reden (DE); STENDER, Axel, 31787 Hameln (DE); VON DER BEEKE, Jan-Christoph, 38114 Braunschweig (DE); WITTE, Norbert, 31867 Lauenau (DE)
(74) Vertreter: Ohlendorf, Henrike

(57) **Zusammenfassung**

Die Erfindung betrifft eine Verkabelung (10) für Fahrzeuge mit elektronischem Bremsensteuergerät (15) und verschiedenen Leuchten (17a, 17b, 17c, 17d, 18a, 18b, 18c, 18d) einer ersten Art, nämlich wenigstens Rückleuchten (17c, 18c) und Rückfahrleuchten (17b, 18b), wobei
- die Verkabelung (10) zur Spannungsversorgung der Leuchten (17a, 17b, 17c, 17d, 18a, 18b, 18c, 18d) erster Art vorgesehen ist,
- eine Eingangsschnittstelle (11) der Verkabelung (10) über Leitungen (12, 12a, 12b, 12c, 12d) mit einer Ausgangsschnittstelle (13) verbunden ist,
- die Eingangsschnittstelle (11) zum Anschluss an spannungführende Leitungen eingerichtet ist,
- die Ausgangsschnittstelle (13) wenigstens zum Anschluss an die Leuchten (17a, 17b, 17c, 17d, 18a, 18b, 18c, 18d) erster Art oder an zu den Leuchten erster Art führende Leitungen eingerichtet ist,
- eine Abzweigschnittstelle (14) an die Leitungen (12, 12a, 12b, 12c, 12d) der Verkabelung (10) angeschlossen ist,
- die Abzweigschnittstelle (14) wenigstens einen ersten Schnittstellenausgang (29) und einen zweiten Schnittstellenausgang (30) aufweist,
- der erste Schnittstellenausgang (29) mit einer der zur Spannungsversorgung der Rückleuchten (17c, 18c) vorgesehenen Leitungen (12c) der Verkabelung (10) verbunden ist,
- der zweite Schnittstellenausgang (30) mit einer der zur Spannungsversorgung der Rückfahrleuchten (17b, 18b) vorgesehenen Leitungen (12b) der Verkabelung (10) verbunden ist.

## Beschreibung

Die Erfindung betrifft eine Verkabelung für Fahrzeuge mit elektronischem Bremsensteuergerät und mit verschiedenen Leuchten. Daneben betrifft die Erfindung ein Ansteuerungsmodul, eine Lichtanlage, ein elektronisches Bremssystem und ein Fahrzeug, insbesondere Anhängefahrzeug.

Moderne Nutzfahrzeuge, auch Anhängefahrzeuge, sind mit einem elektronischen Bremssystem ausgestattet. Eine Lichtanlage des Fahrzeugs ist üblicherweise nicht mit dem elektronischen Bremssystem gekoppelt. Es besteht aber bereits die Möglichkeit, die Beleuchtung im Zusammenhang mit Funktionen des Bremssystems zu nutzen. Bekannt ist die Erkennung einer Rückwärtsfahrt aus der Versorgungsspannung für Rückfahrscheinwerfer und die Verwendung blinkender Umrissleuchten zur Abstandsanzeige, siehe Wabco-Druckschriften-Nr.: 815 020 093 3; Ausgabe 9 (09.2018) in http://www.wabco.info/i/542 mit weiteren Nachweisen. Erforderlich ist eine physische Verbindung vom Beleuchtungssystem zu einem Steuergerät des Bremssystems.

Umrissleuchten leuchten üblicherweise zusammen mit Rückleuchten des Fahrzeugs, die mit dem Fahrlicht meist nur bei Dunkelheit eingeschaltet sind. Eine Verwendung der Umrissleuchten bei Rückwärtsfahrt und Tageslicht erfordert deshalb eine Umschaltung der Spannungsversorgung, sodass keine Abhängigkeit vom Einschalten der Rückleuchten besteht. Das erforderliche Umschalten wird ausgeführt durch eine Schalteinrichtung, die relativ aufwendig individuell angepasst und in die vorhandene Verbindung aus Beleuchtungsanlage und Bremssystem eingefügt wird. Konkret muss eine Verbindung hergestellt werden zwischen einem Bremsensteuergerät und einer Verkabelung im Fahrzeug, nämlich entweder für den Fall, dass bei Rückwärtsfahrt die Umrissleuchten durch das Bremssystem ansteuerbar sind, oder für den Fall, dass die Umrissleuchten ausschließlich zusammen mit den Rückleuchten eingeschaltet sind und das Bremsensteuergerät zwecks Rückwärtsfahrterkennung lediglich die Versorgungsspannung der Rückfahrleuchten detektiert.

Die Verkabelung soll möglichst so ausgebildet sein, dass eine Verwendung für beide zuletzt genannten Fälle möglich ist. Daneben soll die Schalteinheit die beschriebenen Anforderungen zur Verbindung der Verkabelung mit dem Bremsensteuergerät einerseits und zur Ansteuerung der Umrissleuchten andererseits erfüllen. Nachfolgend werden die Rückleuchten und Rückfahrleuchten als Leuchten einer ersten Art bezeichnet, während die Umrissleuchten demgegenüber Leuchten einer zweiten Art sein können.

Zur Lösung der Aufgabe weist die erfindungsgemäße Verkabelung die Merkmale des Anspruchs 1 auf und ist vorgesehen für Fahrzeuge mit elektronischem Bremsensteuergerät und verschiedenen Leuchten einer ersten Art, nämlich wenigstens Rückleuchten und Rückfahrleuchten, wobei
- die Verkabelung zur Spannungsversorgung der Leuchten erster Art vorgesehen ist,
- eine Eingangsschnittstelle der Verkabelung über Leitungen mit einer Ausgangsschnittstelle verbunden ist,
- die Eingangsschnittstelle zum Anschluss an spannungführende Leitungen eingerichtet ist,
- die Ausgangsschnittstelle wenigstens zum Anschluss an die Leuchten erster Art oder an zu den Leuchten erster Art führende Leitungen eingerichtet ist,
- eine Abzweigschnittstelle an die Leitungen der Verkabelung angeschlossen ist,
- die Abzweigschnittstelle wenigstens einen ersten Schnittstellenausgang und einen zweiten Schnittstellenausgang aufweist,
- der erste Schnittstellenausgang mit einer der zur Spannungsversorgung der Rückleuchten vorgesehenen Leitungen der Verkabelung verbunden ist,
- der zweite Schnittstellenausgang mit einer der zur Spannungsversorgung der Rückfahrleuchten vorgesehenen Leitungen der Verkabelung verbunden ist.

Die erfindungsgemäß vorgesehene Abzweigschnittstelle der Verkabelung weist somit zwei Schnittstellenausgänge für die beiden verschiedenen Leuchten erster Art auf, unabhängig davon, ob das betreffende Fahrzeug mit einer Schalteinheit zwischen Beleuchtung und Bremsensteuergerät ausgestattet werden soll. Sofern keine Schalteinheit vorgesehen ist, wird an die Abzweigschnittstelle ein Kabel angeschlossen, welches nur den Schnittstellenausgang für die Rückfahrleuchten belegt. Falls eine Schalteinheit vorgesehen ist, wird ein Kabel mit mehreren Leitern an die Abzweigschnittstelle angeschlossen. In beiden Fällen bleibt die Verkabelung zwischen Eingangsschnittstelle und Ausgangsschnittstelle gleich und muss nicht an die jeweilige Ausstattung angepasst werden.

Die Abzweigschnittstelle ist räumlich-körperlich vorzugsweise eine einzige Kupplung, die mit einer passenden Kupplung eines Kabels als Gegenstück verbindbar ist. Alternativ kann die Abzweigschnittstelle auch aus mehreren Kupplungen gebildet sein, die mit passenden Gegenstücken mehrerer Kabel oder Leiter verbindbar sind. Gleiches gilt für die Eingangsschnittstelle und die Ausgangsschnittstelle.

Nach einem weiteren Gedanken der Erfindung kann die Verkabelung wenigstens eine Leitung zur Spannungsversorgung von Bremsleuchten aufweisen, wobei die Abzweigschnittstelle wenigstens einen dritten Schnittstellenausgang aufweist, welcher mit der zur Spannungsversorgung von Bremsleuchten vorgesehenen Leitung verbunden ist. Dies ermöglicht die Versorgung des Bremsensteuergerätes im Notfall, etwa bei Ausfall der eigenen Spannungsversorgung, mit der für die Bremsleuchten vorgesehenen Spannung.

Nach einem weiteren Gedanken der Erfindung kann die Abzweigschnittstelle eine 7-polige DIN-Bajonettkupplung oder eine 8-polige HDSCS-Kupplung sein, jeweils mit mindestens fünf belegten Kontakten. Die Verwendung derartiger Kupplungen erleichtert die Handhabung und gewährleistet eine hohe Betriebssicherheit.

DIN-Bajonettkupplungen, insbesondere zur Verwendung in Fahrzeugen, sind genormt und mit unterschiedlicher Anzahl an Polen erhältlich. Eigenschaften 4-poliger DIN-Bajonettkupplungen sind in der DIN 72585 (1996) und ISO 15170 (2001) erörtert. Analog hierzu ausgebildete Bajonettkupplungen mit abweichender Polzahl sind ebenfalls bekannt. So verweist eine Produktspezifikation der Tyco Electronics Corporation, Harrisburg, PA 17105, USA (PRODUCT SPECIFICATION 108-18621, Rev. B1, 30.04.2010, Seite 4) auf 2-4polige und 5-7polige Bajonettsteckverbinder nach DIN 72585 / ISO 15170. Eine Produktinformation desselben Herstellers zeigt 4- und 7-polige Stecker und nennt 2-7polige Stecker (https://www.te.com/usa-en/product-CAT-C4962-CH8172.html#, mit Verweis auf PRODUCT SPECIFICATION 108-18621, Rev. B1, 30.04.2010 und APPLICATION SPECIFICATION 114-18255 Rev. D2 30.04.2010).

HDSCS (Heavy Duty Sealed Connector Series) Kupplungen, werden auch als Steckverbinder bezeichnet. Details sind beispielsweise der Quelle https://www.te.com/usa-en/product-CAT-H3399-CH8172.html entnehmbar.

Bei den mindestens fünf belegten Kontakten handelt es sich insbesondere um folgende in der Norm ISO 12098 (2004) definierte Kontakte
- 24N Masse (ISO 12098, PIN 4),
- Rückleuchten (ISO 12098, PIN 5 und 6),
- 24N Bremslicht (ISO 12098, PIN 7),
- Rückfahrleuchte (ISO 12098, PIN 8).

Nach einem weiteren Gedanken der Erfindung können Leuchten einer zweiten Art an die Leuchten erster Art oder an eine Spannungsversorgung für die Leuchten erster Art oder zumindest mittelbar, etwa über Leitungen und/oder weitere Bauteile, an die Verkabelung angeschlossen sein, wobei als Leuchten zweiter Art insbesondere wenigstens eine der nachfolgenden Leuchten vorgesehen ist:
- Spurhalteleuchten,
- Positionsleuchten,
- Warnleuchten,
- Umrissleuchten.

Bei den Leuchten der zweiten Art handelt es sich vorzugsweise um Umrissleuchten. Diese oder ähnliche Leuchten werden auch als Spurhalteleuchten oder Positionsleuchten bezeichnet. Daneben oder alternativ können Warnleuchten oder andere Leuchten als Leuchten zweiter Art vorgesehen sein, soweit diese im Normalfall zusammen mit den Rückleuchten eingeschaltet sein sollen.

Die Verkabelung und damit die Eingangsschnittstelle, die Leitungen und die Ausgangsschnittstelle können auch derart eingerichtet sein, dass die Leuchten zweiter Art über Leitungen und/oder weitere Bauteile an die Ausgangsschnittstelle anschließbar sind.

Ein erfindungsgemäßes Ansteuerungsmodul als Schalteinheit zur Verbindung mit einer Verkabelung nach einem der Ansprüche 1 bis 4 weist die Merkmale des Anspruchs 5 auf und ist mit wenigstens drei Eingängen und einem Ausgang versehen, nämlich mit
- einem ersten Moduleingang zur Verbindung mit dem ersten Schnittstellenausgang der Verkabelung,
- einem zweiten Moduleingang zur Verbindung mit dem zweiten Schnittstellenausgang der Verkabelung,
- einem oder mehreren Steuereingängen zur Verbindung mit einem oder mehreren Steuerausgängen eines Bremsensteuergerätes,
- einem ersten Modulausgang zur Verbindung mit zu Leuchten zweiter Art führenden Leitungen,
wobei über die Steuereingänge eine Verbindung zwischen dem ersten Moduleingang und dem ersten Modulausgang oder zwischen dem zweiten Moduleingang und dem ersten Modulausgang schaltbar ist. Das Ansteuerungsmodul ist so zur Steuerung der Spannungsversorgung für die Leuchten zweiter Art eingerichtet. Wahlweise wird der erste Modulausgang, an den die Leuchten zweiter Art über Leitungen angeschlossen sind, entweder mit dem ersten Moduleingang oder mit dem zweiten Moduleingang durch Umschaltung verbunden. Außerdem ist eine bestehende Verbindung ein- und ausschaltbar. Wenn beispielsweise am zweiten Moduleingang die Spannung für die Rückfahrleuchten anliegt, kann diese über den ersten Modulausgang auf die Leuchten zweiter Art geschaltet werden. Außerdem können die Leuchten zweiter Art durch das gesteuerte Ein- und Ausschalten dieser Verbindung blinkend betrieben werden.

Nach einem weiteren Gedanken der Erfindung kann das Ansteuerungsmodul folgende Merkmale aufweisen:
- einen dritten Moduleingang zur Verbindung mit einem dritten Schnittstellenausgang der Abzweigschnittstelle und
- einen zweiten Modulausgang zur Verbindung mit dem Bremsensteuergerät, wobei der dritte Moduleingang und der zweite Modulausgang verbunden sind, und wobei der zweite Modulausgang als bremslichtabhängige Spannungsversorgung für das Bremsensteuergerät vorgesehen ist. Über das Ansteuerungsmodul wird die Bremslichtspannung als Notversorgung für das Bremsensteuergerät bereitgestellt.

Nach einem weiteren Gedanken der Erfindung kann das Ansteuerungsmodul ein oder mehrere Relais zum Schalten der Verbindung zwischen erstem Moduleingang und erstem Modulausgang sowie zwischen zweitem Moduleingang und erstem Modulausgang aufweisen. Vorzugsweise sind zwei Relais vorgesehen, also für jede Verbindung ein Relais.

Nach einem weiteren Gedanken der Erfindung kann vorgesehen sein, dass zwei Relais durch das Bremsensteuergerät ansteuerbar sind, wobei das eine Relais eine Verbindung vom ersten Moduleingang zum ersten Modulausgang schaltet und das andere Relais eine Verbindung vom zweiten Moduleingang zum erstgenannten Relais schaltet. Die Bestromung bzw. Spannungsversorgung des ersten Modulausgangs erfolgt durch gezielte Ansteuerung der beiden Relais durch das Bremsensteuergerät.

Nach einem weiteren Gedanken der Erfindung kann vorgesehen sein, dass ein Relais durch das Bremsensteuergerät ansteuerbar ist und zwischen einer Verbindung vom ersten Moduleingang zum ersten Modulausgang und einer Verbindung von einem anderen Relais zum ersten Modulausgang schaltet, und dass das andere Relais über den ersten Moduleingang angesteuert wird und eine Verbindung vom zweiten Moduleingang zum erstgenannten Relais schaltet. In diesem Fall wird nur das erstgenannte Relais vom Bremsensteuergerät angesteuert. Das andere Relais wird über den ersten Moduleingang angesteuert.

Nach einem weiteren Gedanken der Erfindung kann das Ansteuerungsmodul einen Versorgungseingang zum Anschluss einer externen Spannungsquelle aufweisen. Als externe Spannungsquelle ist insbesondere eine Batterie vorgesehen. Diese kann auch wiederaufladbar sein. Durch die externe Spannungsquelle kann das Ansteuerungsmodul unabhängig von der Verkabelung mit Spannung versorgt werden.

Nach einem weiteren Gedanken der Erfindung kann im Ansteuerungsmodul der Versorgungseingang mit einem zweiten Modulausgang verbunden sein, sodass bei Anschluss einer Spannungsquelle an den Versorgungseingang eine Versorgungsspannung am zweiten Modulausgang anliegt oder auf den Modulausgang aufschaltbar ist, wobei der zweite Modulausgang zur Verbindung mit dem Bremsensteuergerät vorgesehen ist. Auf diese Weise ist das Bremsensteuergerät an die externe Spannungsquelle anschließbar.

Nach einem weiteren Gedanken der Erfindung kann im Ansteuerungsmodul ein Versorgungs-Relais zum Aufschalten des Versorgungseingangs auf den zweiten Modulausgang zur Verbindung mit dem Bremsensteuergerät vorgesehen sein. Zusätzlich kann das Ansteuerungsmodul einen Schalter zur Betätigung des Versorgungs-Relais aufweisen. Eine Ansteuerung des Versorgungs-Relais kann zusätzlich oder ausschließlich über einen aus dem Bremsensteuergerät gespeisten Steuereingang erfolgen. Ein Lösen oder Abschalten des Versorgungs-Relais kann zusätzlich oder ausschließlich in Abhängigkeit von der Spannungsversorgung oder dem Abschalten einer Zündung des Fahrzeugs erfolgen, auch zeitverzögert. Ist das Ansteuerungsmodul in einem Anhängefahrzeug vorgesehen, kann auch das Abkoppeln des Anhängefahrzeugs mittelbar das Lösen oder Abschalten des Versorgungs-Relais auslösen, vorzugsweise mit Zeitverzögerung.

Bei Betätigung des Schalters erhält das Versorgungs-Relais seine Energie aus dem Versorgungseingang. Der Schalter ermöglicht die Betätigung des Versorgungs-Relais durch eine Bedienungsperson. Das Versorgungs-Relais kann alternativ zum Schalter auch durch eine vom Bremsensteuergerät bereitgestellte Spannung angesteuert werden.

Nach einem weiteren Gedanken der Erfindung kann das Ansteuerungsmodul einen Relaisversorgungseingang aufweisen, nämlich zur Verbindung mit einem spannungführenden Ausgang des Bremsensteuergerätes, wobei das Versorgungs-Relais durch Spannung am Relaisversorgungseingang schaltbar ist. Der Relaisversorgungseingang ist im Ansteuerungsmodul mit dem Versorgungs-Relais verbunden.

Nach einem weiteren Gedanken der Erfindung weist das Ansteuerungsmodul zwischen dem Relaisversorgungseingang und dem Versorgungs-Relais eine Diode zur Verhinderung einer Bestromung des Relaisversorgungseingangs auf. Die Diode lässt nur einen Strom zum Versorgungs-Relais zu. Anderenfalls bestünde die Gefahr, dass über den Relaisversorgungseingang eine unzulässige Spannung am Bremsensteuergerät anliegt.

Nach einem weiteren Gedanken der Erfindung kann der Versorgungseingang mit dem dritten Moduleingang und dem zweiten Modulausgang verbunden sein. Der dritte Moduleingang ist vorzugsweise an die Bremslichtspannung angeschlossen (dritter Schnittstellenausgang) und mit dem zweiten Modulausgang verbunden, so dass der zweite Modulausgang die Bremslichtspannung als Spannungsversorgung für das Bremsensteuergerät bereitstellt. Der Versorgungseingang ist auf diese Bremslichtspannungsversorgung für das Bremsensteuergerät aufgeschaltet.

Nach einem weiteren Gedanken der Erfindung kann vorgesehen sein, dass durch Dioden ein Stromfluss vom Versorgungseingang zum dritten Moduleingang und vom dritten Moduleingang zum Versorgungseingang verhindert wird. Der Stromfluss soll vorzugsweise nur in Richtung des zweiten Modulausgangs, also zum Bremsensteuergerät möglich sein.

Gegenstand der Erfindung ist auch eine Lichtanlage für ein Fahrzeug, mit einer Verkabelung nach einem der Ansprüche 1 bis 4. In der Lichtanlage kann als Leuchte zweiter Art wenigstens eine der nachfolgenden Leuchten vorgesehen sein:
- Spurhalteleuchten,
- Positionsleuchten,
- Warnleuchten,
- Umrissleuchten.

Gegenstand der Erfindung ist auch ein elektronisches Bremssystem für Fahrzeuge, mit elektronischem Bremsensteuergerät, welches eingerichtet ist zum Anschluss an eine Verkabelung nach einem der Ansprüche 1 bis 4. Insbesondere weist das elektronische Bremssystem ein Ansteuerungsmodul nach einem der Ansprüche 5 bis 16 auf. Das elektronische Bremsensteuergerät ist dann zum Anschluss des Ansteuerungsmoduls eingerichtet.

Das elektronische Bremssystem kann derart eingerichtet sein, dass Bremsensteuergerät und Leuchten zweiter Art zumindest beim Ansteuern der letzteren durch das Bremsensteuergerät galvanisch getrennt sind. Die galvanische Trennung wird insbesondere im Bereich des Ansteuerungsmoduls hergestellt, etwa durch Verwendung von Relais.

Nach einem weiteren Gedanken der Erfindung kann das elektronische Bremssystem ein Ansteuerungsmodul mit Relaisfunktion enthalten, wobei das Bremsensteuergerät mittels der Relaisfunktion eine Verbindung von einem Versorgungseingang des Ansteuerungsmoduls zum Bremsensteuergerät trennen kann. Auf diese Weise kann das Bremsensteuergerät beispielsweise eine elektrische Verbindung zwischen einer externen Spannungsquelle und dem Bremsensteuergerät trennen, nämlich durch Betätigung der Relaisfunktion im Ansteuerungsmodul.

Nach einem weiteren Gedanken der Erfindung kann das Ansteuerungsmodul in das Bremsensteuergerät integriert sein. Die Funktionen des Ansteuerungsmoduls sind dann mit den Funktionen des Bremsensteuergerätes in einer gemeinsamen Vorrichtung zusammengefasst, insbesondere innerhalb eines gemeinsamen Gehäuses.

Gegenstand der Erfindung ist auch ein Fahrzeug mit elektronischem Bremssystem, einer Verkabelung nach einem der Ansprüche 1 bis 4, einer Lichtanlage nach einem der Ansprüche 15 bis 16 und einem elektronischen Bremssystem nach einem der Ansprüche 19 bis 23. Insbesondere handelt es sich bei dem Fahrzeug um ein Anhängefahrzeug.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: eine Verkabelung als Teil einer Lichtanlage in einem Fahrzeug und mit Verbindung zu einem Bremsensteuergerät,
- Fig. 2: eine Darstellung analog Fig. 1, jedoch mit Ansteuerungsmodul zwischen der Verkabelung und dem Bremsensteuergerät,
- Fig. 3: eine andere Art der Darstellung gemäß Fig. 1, nämlich mit Details der Verkabelung,
- Fig. 4: eine Darstellung analog Fig. 3, jedoch mit Ansteuerungsmodul (wie Fig. 2) und externer Spannungsquelle,
- Fig. 5: eine Darstellung analog Fig. 4, jedoch mit zusätzlichen Details im Bereich des Ansteuerungsmoduls,
- Fig. 6: einen vergrößerten Ausschnitt aus Fig. 5,
- Fig. 7a: einen vergrößerten Ausschnitt aus Fig. 6, mit in besonderer Weise angesteuerten Relais,
- Fig. 7b: eine Darstellung wie in Fig. 7a, jedoch in einem anderen Schaltzustand,
- Fig. 7c: eine Darstellung wie in Fig. 7b, jedoch in einem anderen Spannungszustand,
- Fig. 7d: eine Darstellung wie in Fig. 7a, jedoch in einem anderen Spannungszustand.

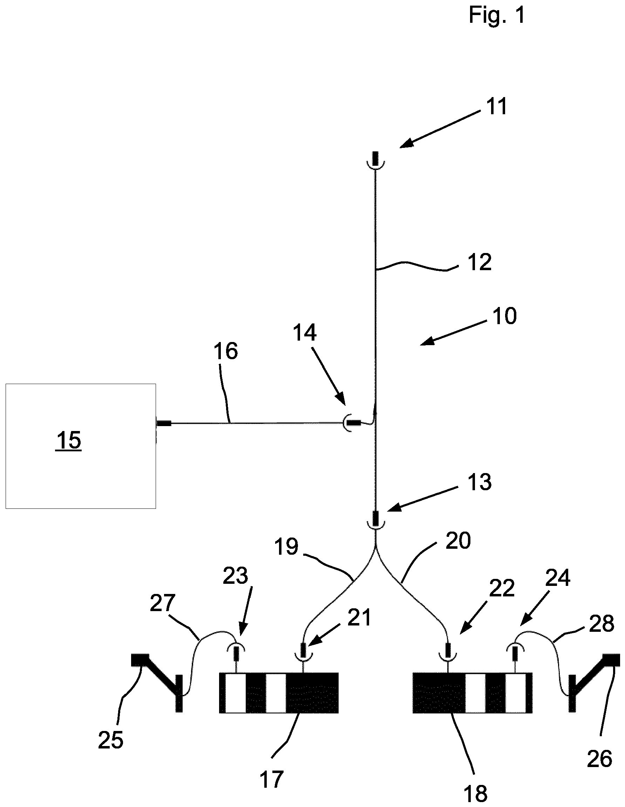

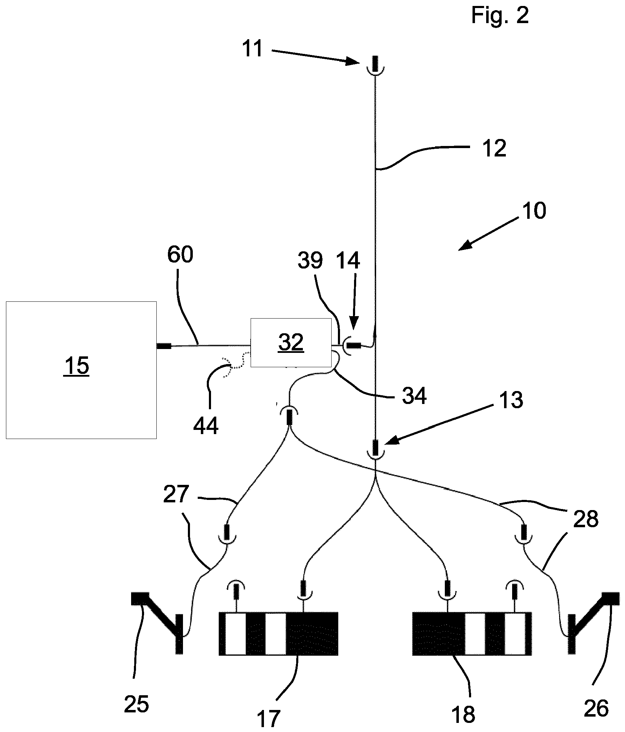

Gemäß Fig. 1 weist eine Verkabelung 10 für eine Lichtanlage in einem Anhängefahrzeug eine Eingangsschnittstelle 11 auf, die über Leitungen 12 mit einer Ausgangsschnittstelle 13 verbunden ist. Die Anzahl der Leitungen 12 ist zunächst unbestimmt. Zur Vereinfachung ist in den Fig. 1 und 2 nur eine Leitung 12 eingezeichnet.

Aus der Verkabelung 10 zwischen Eingangsschnittstelle 11 und Ausgangsschnittstelle 13 herausgeführt und zumindest mit einigen der Leitungen 12 verbunden ist eine Abzweigschnittstelle 14. Ein Bremsensteuergerät 15 eines elektronischen Bremssystems ist über wenigstens eine Leitung 16 mit der Abzweigschnittstelle 14 verbunden.

Die Eingangsschnittstelle 11 ist hier ein Lichtanschluss mit Kontakten, z.B. gemäß ISO 12098 (Ausgabe 2004) oder ISO 1185 (Ausgabe 2003) oder ISO 3731 (Ausgabe 2003).

| | |
|---|---|
| - PIN 4: | 24N Masse |
| - PIN 5: | Rückleuchten links |
| - PIN 6: | Rückleuchten rechts |
| - PIN 7: | 24N Bremsleuchtenspannung |
| - PIN 8: | Rückfahrleuchten |
| - PIN 10: | Funktion einer Lenkachssperre |
| - PIN 11: | Anfahrhilfe |
| - PIN 12: | Funktion einer Liftachse |

Je nach Funktion der Eingangsschnittstelle, können alle genannten Kontakte, eine Teilmenge davon oder mehr Kontakte vorgesehen und belegt sein. Vorzugsweise sind zumindest die PINs 4 bis 8 belegt.

Die Verkabelung 10 dient hier der Spannungsversorgung von Leuchten an einem hinteren Ende des Anhängefahrzeugs. Die Leuchten sind in einer linken Lichtleiste 17 und einer rechten Lichtleiste 18 zusammengefasst. Entsprechend ist die Ausgangsschnittstelle 13 über Leitungen 19 mit einem Eingang 21 der linken Lichtleiste 17 verbunden und über Leitungen 20 mit einem Eingang 22 der rechten Lichtleiste 18. Jede der beiden Lichtleisten 17, 18 weist einen Ausgang 23, 24 auf, nämlich zur Spannungsversorgung von seitlichen Umrissleuchten 25, 26 über Leitungen 27, 28.

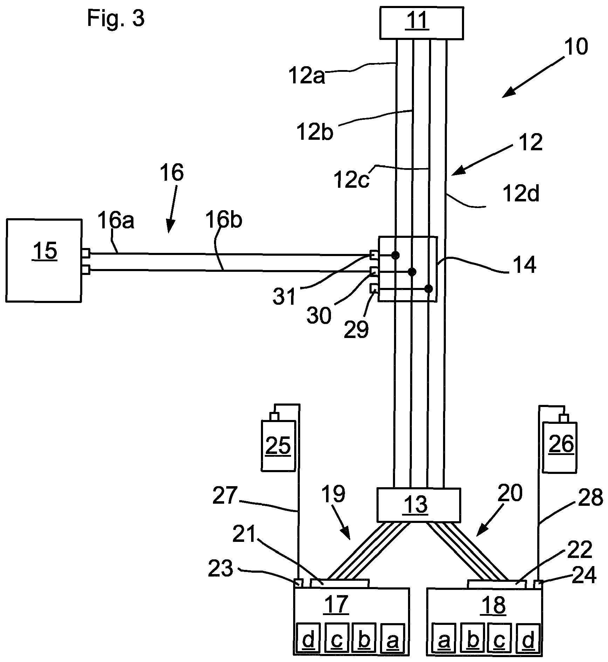

Jede Lichtleiste 17, 18 weist hier zumindest vier Leuchten auf, nämlich Bremsleuchte 17a, 18a, Rückfahrleuchte 17b, 18b, Rückleuchte 17c, 18c und Blinkleuchte 17d, 18d. Entsprechend sind in der detaillierten Darstellung der Fig. 3 vier Leitungen eingezeichnet, nämlich Leitung 12a (Bremsleuchtenleitung), Leitung 12b (Rückfahrleuchtenleitung), Leitung 12c (Rückleuchtenleitung) und Leitung 12d (Blinkleuchtenleitung). Zur Vereinfachung der Darstellung ist nur eine Blinkleuchtenleitung 12d gezeichnet. Tatsächlich sind für links und rechts separate Blinkleuchtenleitungen vorhanden.

Die Abzweigschnittstelle 14 ist in besonderer Weiser ausgebildet und weist mehrere Schnittstellenausgänge auf, nämlich zumindest einen ersten Schnittstellenausgang 29, welcher an die Leitung 12c für die Rückleuchten 17c, 18c angeschlossen ist, einen zweiten Schnittstellenausgang 30, welcher an die Leitung 12b für die Rückfahrleuchten 17b, 18b angeschlossen ist, und einen dritten Schnittstellenausgang 31, welcher an die Leitung 12a zur Spannungsversorgung der Bremsleuchten 17a, 18a angeschlossen ist.

In Fig. 3 sind auch die Leitungen 16 im Detail dargestellt, nämlich Leitung 16a und Leitung 16b, welche beide zum Bremsensteuergerät 15 führen. Über die Leitung 16a kann das Bremsensteuergerät 15 im Notfall/Stromausfall wenigstens beim Bremsen mit Bremslichtspannung versorgt werden. Über die Leitung 16b erhält das Bremsensteuergerät 15 eine Spannung, sobald der Rückwärtsgang im Fahrzeug bzw. Zugfahrzeug eingelegt ist und die Rückfahrleuchten 17b, 18b aktiv sind. Somit detektiert das Bremsensteuergerät 15 über die Leitung 16b eine Rückwärtsfahrt.

Eine Leitung vom ersten Schnittstellenausgang 29 (Spannungsversorgung für Rückleuchten) zum Bremsensteuergerät ist im Ausführungsbeispiel der Fig. 3 nicht vorgesehen.

In Fig. 3 und in den anderen Figuren nicht eingezeichnet sind elektrische Masseverbindungen. Tatsächlich kann die Abzweigschnittstelle 14 in der Praxis zusätzlich eine Masseverbindung und weitere bekannte oder standardisierte Kontakte enthalten. Vorzugsweise ist die Abzweigschnittstelle 14 als 7-polige DIN-Bajonettkupplung oder 8-polige HDSCS-Kupplung ausgebildet, mit folgenden PIN-Zuordnungen nach ISO 12098 (2004):

| | |
|---|---|
| - PIN 4: | 24N Masse |
| - PIN 5: | Rückleuchten links |
| - PIN 6: | Rückleuchten rechts |
| - PIN 7: | 24N Bremsleuchtenspannung |
| - PIN 8: | Rückfahrleuchten |
| - PIN 11: | Anfahrhilfe |

In der Praxis sind für die Rückleuchten üblicherweise zwei Stromkreise vorgesehen, daher die Belegung der PINs 5 und 6. In den Figuren ist zur Vereinfachung nur ein Stromkreis dargestellt, deshalb auch nur der eine erste Schnittstellenausgang 29 für die Spannung der Rückleuchten.

Im Ausführungsbeispiel der Fig. 1 und 3 werden die Umrissleuchten 25 ausschließlich zusammen mit den Rückleuchten eingeschaltet. Im Gegensatz dazu steuert in den Ausführungsbeispielen der Fig. 2, 4 und 5 das Bremsensteuergerät 15 die Funktion der Umrissleuchten 25, 26. Hierzu ist zwischen Abzweigschnittstelle 14 und Bremsensteuergerät 15 ein Ansteuerungsmodul 32 geschaltet, mit einem ersten Modulausgang 33, von dem eine Leitung 34 zu einem Knotenpunkt 35 führt. Die Leitungen 27, 28 sind hier nicht an die Ausgänge 23, 24 angeschlossen, sondern an den Knotenpunkt 35.

Das Ansteuerungsmodul 32 weist neben dem ersten Modulausgang 33 drei Moduleingänge auf, nämlich einen ersten Moduleingang 36, einen zweiten Moduleingang 37 und einen dritten Moduleingang 38, die über Leitungen 39a, 39b, 39c mit den Schnittstellenausgängen 29, 30, 31 verbunden sind. Die Abzweigschnittstelle 14 ist in derselben Weise ausgebildet wie im Ausführungsbeispiel der Fig. 1 und 3, ebenso die Verkabelung 10 im Übrigen, also zumindest zwischen Eingangsschnittstelle 11 und Ausgangsschnittstelle 13, hier sogar bis hin zu den Lichtleisten 17, 18.

Das Ansteuerungsmodul 32 ist in den Ausführungsbeispielen der Fig. 2, 4, 5, 6 zur Ansteuerung der Umrissleuchten 25, 26 durch das Bremsensteuergerät 15 in besonderer Weise eingerichtet. Wahlweise können die Umrissleuchten 25, 26 an die Versorgungsspannungen für die Rückfahrleuchten oder für die Rückleuchten aufgeschaltet werden. Hierzu sind im Ansteuerungsmodul 32 zwei Relais 40, 41 vorgesehen, welche beide vom Bremsensteuergerät 15 über Steuereingänge 42, 43 ansteuerbar sind. Insbesondere ist eine Umschaltung der Spannungsversorgung möglich.

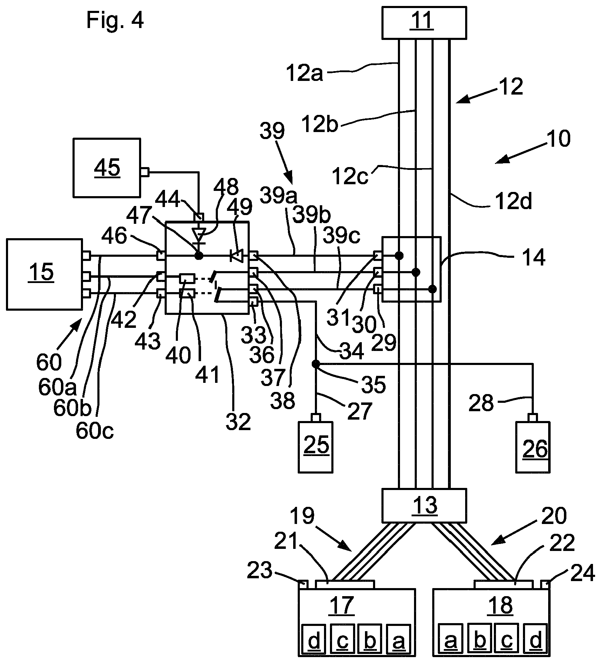

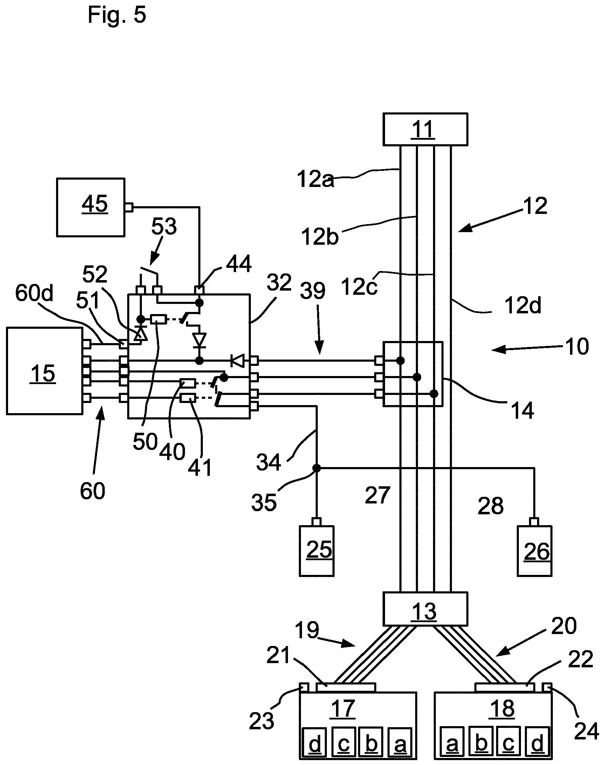

Im Normalbetrieb sind die Umrissleuchten 25, 26 über die Leitungen 27, 28, 34, 39c an die Spannungsversorgung für die Rückleuchten angeschlossen, wie in den Fig. 4 und 5 dargestellt. Durch entsprechende Betätigung des Relais 41 wird die Verbindung zwischen dem ersten Modulausgang 33 und dem ersten Moduleingang 36 geöffnet und bei Rückwärtsfahrt stattdessen eine Verbindung vom zweiten Moduleingang 37 zum ersten Modulausgang 33 hergestellt, indem außerdem das Relais 40 betätigt wird. Anschließend sind die Umrissleuchten 25, 26 über die Leitungen 27, 28, 34, 39b an die Spannungsversorgung der Rückfahrlichter angeschlossen. Ausgehend von diesem Zustand können die Umrissleuchten 25, 26 durch weitere Betätigung des Relais 40 - nach Ansteuerung durch das Bremsensteuergerät 15 - im Blinkmodus betrieben werden, etwa in Verbindung mit einer nicht dargestellten Rückraumüberwachung durch Annäherungssensoren. Je dichter das Fahrzeug bei Rückwärtsfahrt einem im Wege stehenden Objekt kommt, umso schneller blinken die Umrissleuchten. Hierzu erhält das Bremsensteuergerät 15 entsprechende Signale von nicht dargestellten Annäherungssensoren.

Das Ansteuerungsmodul 32 weist außerdem einen Versorgungseingang 44 für eine externe Spannungsversorgung durch eine Batterie 45 auf. Das Bremsensteuergerät 15 kann so über einen zweiten Modulausgang 46 des Ansteuerungsmoduls 32 mit einer Spannung versorgt werden. Der zweite Modulausgang 46 ist mit dem dritten Moduleingang 38 verbunden, sodass am zweiten Modulausgang 46 auch Bremslichtspannung anliegt. Versorgungseingang 44, zweiter Modulausgang 46 und dritter Moduleingang 38 sind im Bereich eines Knotenpunkts 47 miteinander verbunden. Zur Vermeidung eines Stromflusses von der Batterie 45 zu den Bremsleuchten und von der Spannungsversorgung für die Bremsleuchten zur Batterie 45 sind Dioden 48, 49 zwischen dem Knotenpunkt 47 und dem Versorgungseingang 44 einerseits und zwischen dem Knotenpunkt 47 und dem dritten Moduleingang 38 andererseits vorgesehen.

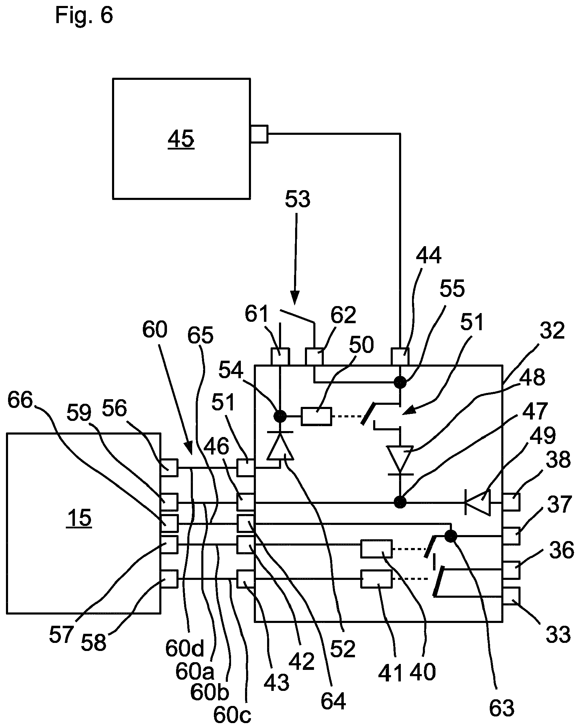

In Fig. 5 und 6 ist eine Erweiterung des Ansteuerungsmoduls 32 ersichtlich. Zwischen der Diode 48 und dem Versorgungseingang 44 ist eine durch ein Relais 50 schaltbare Verbindung 51 vorgesehen. Das Relais 50 ist über einen Relaisversorgungseingang 51 mit anschließender Diode 52 durch das Bremsensteuergerät 15 ansteuerbar. Der Relaisversorgungseingang 51 ist funktional ein Steuereingang am Ansteuerungsmodul 32.

Durch gezielte Betätigung des Relais 50 kann die Verbindung von der Batterie 45 zum Bremsensteuergerät 15 geschaltet, insbesondere unterbrochen werden. Das Relais 50 wird deshalb auch als Halterelais oder Versorgungs-Relais bezeichnet.

Mit dem Ansteuerungsmodul 32 verbunden ist ein Schalter 53, mit dem der Versorgungseingang 44 unabhängig vom Bremsensteuergerät 15 auf das Relais 50 aufschaltbar ist. Entsprechend kann mit dem Schalter 53 das Relais 50 aktiviert und so die Verbindung zwischen dem Versorgungseingang 44 und dem Knotenpunkt 47 hergestellt werden. Der Schalter 53 ist vorzugsweise außen am Fahrzeug angeordnet, sodass eine Bedienungsperson den Schalter 53 betätigen und so die Spannungsversorgung für das Bremsensteuergerät 15 anschalten kann.

Der Schalter 53 ist verbunden mit einem Knotenpunkt 54 zwischen Diode 52 und Relais 50 sowie mit einem Knotenpunkt 55 zwischen Verbindung 51 und Versorgungseingang 44.

Entsprechend den Steuereingängen 51 (Relaisversorgungseingang), 42, 43 und dem zweiten Modulausgang 46, weist das Bremsensteuergerät 15 Steuerausgänge 56, 57, 58 und einen Eingang 59 auf. Zur Verbindung zwischen den genannten Eingängen und Ausgängen sind Leitungen 60 vorgesehen, nämlich Leitungen 60a, 60b, 60c und 60d.

Der erste Modulausgang 33 ist vorzugsweise als 4-polige DIN-Bajonettkupplung oder 4-polige HDSCS-Kupplung ausgebildet, mit folgender PIN-Belegung:

| | |
|---|---|
| - PIN 1: | linke Umrissleuchte |
| - PIN 2: | Masse für linke Umrissleuchte |
| - PIN 3: | rechte Umrissleuchte |
| - PIN 4: | Masse für rechte Umrissleuchte |

Die Leitung 34 weist ein zu den genannten Kupplungen passendes Gegenstück auf. Der Versorgungseingang 44 und Anschlüsse 61, 62 für den Schalter 53 können zusammengefasst sein in einer 4-poligen DIN-Bajonettkupplung oder 4-poligen HDSCS-Kupplung, mit folgender PIN-Belegung:

| | |
|---|---|
| - PIN 1: | Batterie |
| - PIN 2: | Masse Batterie |
| - PIN 3: | Schalter |
| - PIN 4: | Masseschalter |

Damit das Bremsensteuergerät 15 eine Rückwärtsfahrt erkennen kann, ist der zweite Moduleingang 37, an dem die Spannung aus der Rückfahrleuchtenleitung 12b anliegt, intern über einen Knotenpunkt 63 mit einem Spannungsausgang 64 des Ansteuerungsmoduls 32 verbunden . Vom Spannungsausgang 64 führt eine Leitung 65 zu einem Spannungseingang 66 am Bremsensteuergerät 15, siehe insbesondere Fig. 6.

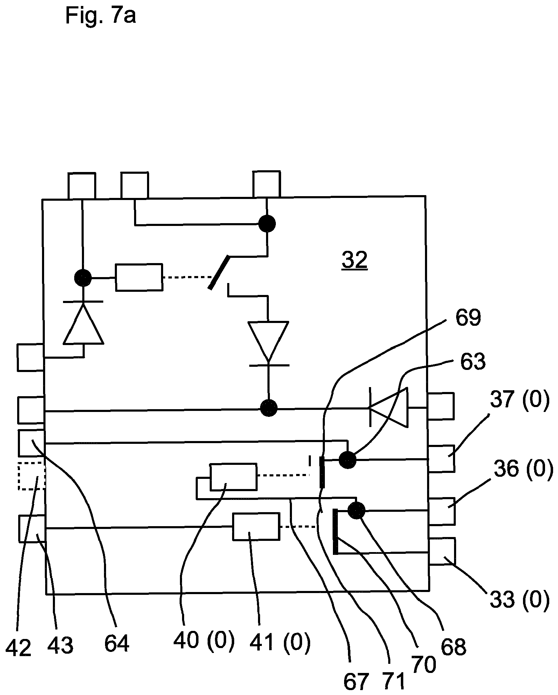

Während in den Fig. 4 bis 6 die beiden Relais 40, 41 vom Bremsensteuergerät 15 über die Steuereingänge 42, 43 angesteuert werden, wird in den Fig. 7a bis 7d nur das Relais 41 über den Steuereingang 43 angesteuert. Der Steuereingang 42 ist in den Fig. 7a bis 7d nicht vorhanden und deshalb dort nur gestrichelt gezeichnet. Das Relais 40 wird über den ersten Moduleingang 36, also über die Rückleuchtenleitung 12c bestromt. Nachfolgend werden die dabei auftretenden Schaltzustände und Spannungszustände erläutert. Neben den Bezugsziffern 33, 36, 37, 40, 41 ist jeweils angegeben, ob die betreffenden Teile unbestromt (0) oder bestromt (+) sind.

In Fig. 7a liegt am ersten Moduleingang 36 und am zweiten Moduleingang 37 keine Spannung an und es fließt kein Strom, ebenso nicht an den beiden Relais 40, 41. Dadurch ist auch der erste Modulausgang 33 unbestromt. Diese Konstellation liegt beispielsweise dann vor, wenn das Fahrzeug tagsüber bewegt wird und kein Fahrlicht (mit Rücklicht) eingeschaltet ist.

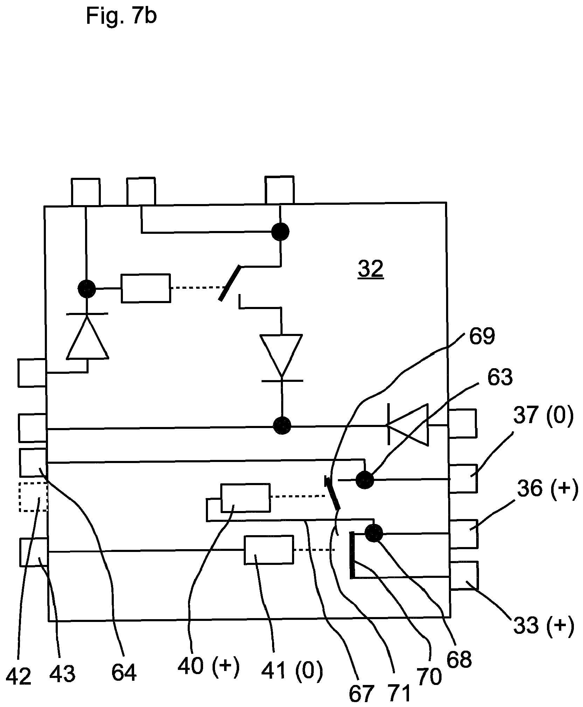

Fig. 7b zeigt eine Spannung am ersten Moduleingang 36, während am zweiten Moduleingang 37 keine Spannung anliegt. Am Fahrzeug ist das Fahrlicht (mit Rücklicht) eingeschaltet, sodass der erste Modulausgang 33 über den ersten Moduleingang 36 bestromt ist. Außerdem wird das Relais 40 über eine Verbindungsleitung 67 und einen Knotenpunkt 68 vom ersten Moduleingang 36 bestromt, sodass ein Relaisanker 69 eine Verbindung von einem Leiter 71 zum zweiten Moduleingang 37 trennt.

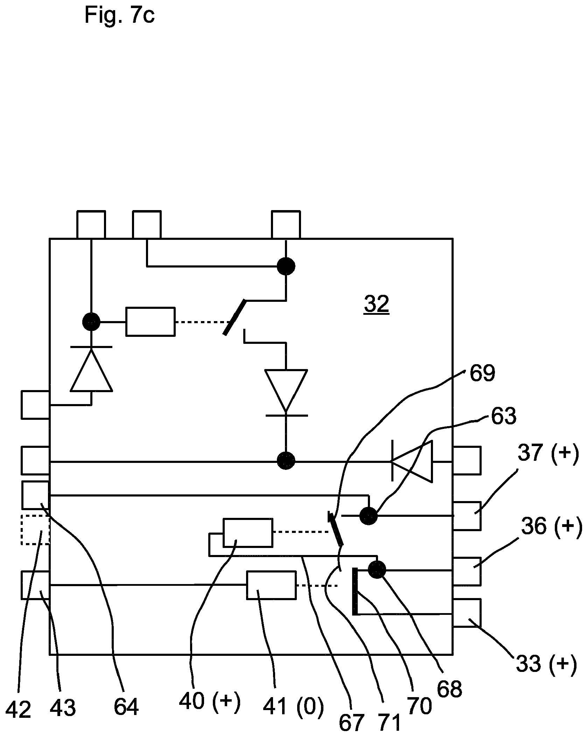

In Fig. 7c liegt am ersten Moduleingang 36 und am zweiten Moduleingang 37 Spannung an. Das Fahrlicht (mit Rücklicht) ist eingeschaltet. Zugleich fährt das Fahrzeug rückwärts, so dass die Rückfahrleuchten eingeschaltet sind. Der erste Modulausgang 33 ist über den Relaisanker 70 des unbestromten Relais 41 mit der Spannung des ersten Moduleingangs 36 beaufschlagt. Da eine Rückwärtsfahrt ausgeführt wird, sollen nun die Umrissleuchten 25, 26 über den Steuereingang 43 ansteuerbar sein, um den Abstand zu einem Hindernis durch variierendes taktweises Aufleuchten zu signalisieren. Bei Bestromung des Relais 41 über den Steuereingang 43 ändert sich der in Fig. 7c gezeigte Schaltzustand derart, dass der Relaisanker 70 die Verbindung zum ersten Moduleingang 36 trennt und stattdessen den Leiter 71 zum Relaisanker 69 kontaktiert. Der Relaisanker 70 ist dann im Gegensatz zur Darstellung in Fig. 7c geöffnet, ebenso wie der Relaisanker 69. Damit ist der erste Modulausgang 33 unbestromt/ohne Spannung. Durch taktweise Ansteuerung des Relais 41 kann so der erste Modulausgang 33 zum Blinken der Umrissleuchten 25, 26 angesteuert werden.

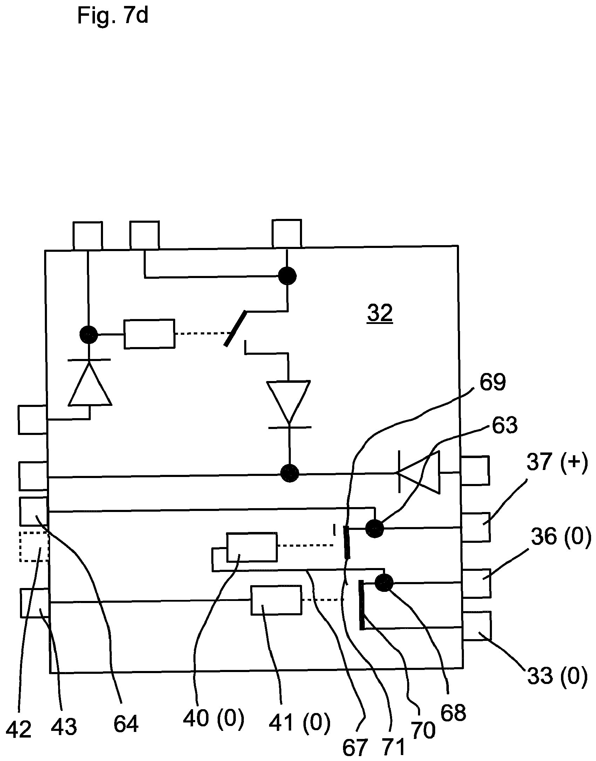

In Fig. 7d ist eine Konstellation ausgehend vom Zustand in Fig. 7a gezeigt. Der erste Moduleingang 36 ist unbestromt/ohne Spannung. Es liegt aber Spannung am zweiten Moduleingang 37 an. Das Fahrlicht (mit den Rückleuchten) ist nicht eingeschaltet. Die Rückfahrleuchten 17b, 18b sind eingeschaltet. Die beiden Relais 40, 41 sind unbestromt. Entsprechend verbindet der Relaisanker 70 den ersten Modulausgang 33 mit dem ersten Moduleingang 36, während der Relaisanker 69 den Leiter 71 mittelbar mit dem zweiten Moduleingang 37 verbindet. Eine getaktete Ansteuerung der Umrissleuchten 25, 26 ist aus dieser Konstellation möglich durch taktweises Ansteuern des Relais 41, sodass der Relaisanker 70 taktweise mit dem Leiter 71 verbunden ist und mittelbar eine Verbindung zwischen dem zweiten Moduleingang 37 und dem ersten Modulausgang 33 herstellt.

### Bezugszeichenliste (Bestandteil der Beschreibung)

- 10: Verkabelung
- 11: Eingangsschnittstelle
- 12: Leitungen
- 12a: Bremsleuchtenleitung
- 12b: Rückfahrleuchtenleitung
- 12c: Rückleuchtenleitung
- 12d: Blinkleuchtenleitung
- 13: Ausgangsschnittstelle
- 14: Abzweigschnittstelle
- 15: Bremsensteuergerät
- 16: Leitungen
- 16a: Leitung Bremsleuchtenspannung
- 16b: Leitung Rückfahrleuchtenspannung
- 17: linke Lichtleiste
- 17a: Bremsleuchte
- 17b: Rückfahrleuchte
- 17c: Rückleuchte
- 17d: Blinkleuchte
- 18: rechte Lichtleiste
- 18a: Bremsleuchte
- 18b: Rückfahrleuchte
- 18c: Rückleuchte
- 18d: Blinkleuchte
- 19: Leitungen
- 20: Leitungen
- 21: Eingang
- 22: Eingang
- 23: Ausgang
- 24: Ausgang
- 25: Umrissleuchte
- 26: Umrissleuchte
- 27: Leitung
- 28: Leitung
- 29: erster Schnittstellenausgang (Rückleuchtenspannung)
- 30: zweiter Schnittstellenausgang (Rückfahrleuchtenspannung)
- 31: dritter Schnittstellenausgang (Bremsleuchtenspannung)
- 32: Ansteuerungsmodul
- 33: erster Modulausgang
- 34: Leitung
- 35: Knotenpunkt
- 36: erster Moduleingang
- 37: zweiter Moduleingang
- 38: dritter Moduleingang
- 39: Leitung
- 39a: Leitung Bremsleuchtenspannung
- 39b: Leitung Rückfahrleuchtenspannung
- 39c: Leitung Rückleuchtenspannung
- 40: Relais
- 41: Relais
- 42: Steuereingang
- 43: Steuereingang
- 44: Versorgungseingang
- 45: Batterie
- 46: zweiter Modulausgang
- 47: Knotenpunkt
- 48: Diode
- 49: Diode
- 50: Relais (Versorgungs-Relais)
- 51: Relaisversorgungseingang
- 52: Diode
- 53: Schalter
- 54: Knotenpunkt
- 55: Knotenpunkt
- 56: Steuerausgang
- 57: Steuerausgang
- 58: Steuerausgang
- 59: Eingang
- 60: Leitung
- 60a: Leitung
- 60b: Leitung
- 60c: Leitung
- 60d: Leitung
- 61: Anschluss
- 62: Anschluss
- 63: Knotenpunkt
- 64: Spannungsausgang
- 65: Leitung
- 66: Spannungseingang
- 67: Verbindungsleitung
- 68: Knotenpunkt
- 69: Relaisanker
- 70: Relaisanker
- 71: Leiter

## Patentansprüche

1. Verkabelung (10) für Fahrzeuge mit elektronischem Bremsensteuergerät (15) und verschiedenen Leuchten (17a, 17b, 17c, 17d, 18a, 18b, 18c, 18d) einer ersten Art, nämlich wenigstens Rückleuchten (17c, 18c) und Rückfahrleuchten (17b, 18b), wobei
- die Verkabelung (10) zur Spannungsversorgung der Leuchten (17a, 17b, 17c, 17d, 18a, 18b, 18c, 18d) erster Art vorgesehen ist,
- eine Eingangsschnittstelle (11) der Verkabelung (10) über Leitungen (12, 12a, 12b, 12c, 12d) mit einer Ausgangsschnittstelle (13) verbunden ist,
- die Eingangsschnittstelle (11) zum Anschluss an spannungführende Leitungen eingerichtet ist,
- die Ausgangsschnittstelle (13) wenigstens zum Anschluss an die Leuchten (17a, 17b, 17c, 17d, 18a, 18b, 18c, 18d) erster Art oder an zu den Leuchten erster Art führende Leitungen eingerichtet ist,
- eine Abzweigschnittstelle (14) an die Leitungen (12, 12a, 12b, 12c, 12d) der Verkabelung (10) angeschlossen ist,
- die Abzweigschnittstelle (14) wenigstens einen ersten Schnittstellenausgang (29) und einen zweiten Schnittstellenausgang (30) aufweist,
- der erste Schnittstellenausgang (29) mit einer der zur Spannungsversorgung der Rückleuchten (17c, 18c) vorgesehenen Leitungen (12c) der Verkabelung (10) verbunden ist,
- der zweite Schnittstellenausgang (30) mit einer der zur Spannungsversorgung der Rückfahrleuchten (17b, 18b) vorgesehenen Leitungen (12b) der Verkabelung (10) verbunden ist.

2. Verkabelung nach Anspruch 1, **gekennzeichnet durch** wenigstens eine Leitung zur Spannungsversorgung von Bremsleuchten (17a, 18a), wobei die Abzweigschnittstelle (14) wenigstens einen dritten Schnittstellenausgang (31) aufweist, welcher mit der zur Spannungsversorgung von Bremsleuchten (17a, 18a) vorgesehenen Leitung (12a) verbunden ist.

3. Verkabelung nach Anspruch 1 oder 2, **dadurch gekennzeichnet, dass** die Abzweigschnittstelle (14) eine 7-polige DIN-Bajonettkupplung oder eine 8-polige HDSCS-Kupplung ist, jeweils mit mindestens fünf belegten Kontakten.

4. Verkabelung nach einem der Ansprüche 1 bis 3, **dadurch gekennzeichnet, dass** Leuchten (25, 26) einer zweiten Art an die Leuchten (17a, 17b, 17c, 17d, 18a, 18b, 18c, 18d) erster Art oder an eine Spannungsversorgung für die Leuchten (17a, 17b, 17c, 17d, 18a, 18b, 18c, 18d) erster Art oder zumindest mittelbar an die Verkabelung angeschlossen sind, und dass als Leuchten zweiter Art insbesondere wenigstens eine der nachfolgenden Leuchten vorgesehen ist:
- Spurhalteleuchten,
- Positionsleuchten,
- Warnleuchten,
- Umrissleuchten (25, 26).

5. Ansteuerungsmodul (32) zur Verbindung mit einer Verkabelung (10) nach einem der Ansprüche 1 bis 4, **gekennzeichnet durch** wenigstens drei Eingänge und einen Ausgang, nämlich mit
- einem ersten Moduleingang (36) zur Verbindung mit dem ersten Schnittstellenausgang (29) der Verkabelung (10),
- einem zweiten Moduleingang (37) zur Verbindung mit dem zweiten Schnittstellenausgang (30) der Verkabelung (10),
- einem oder mehreren Steuereingängen (42, 43) zur Verbindung mit einem oder mehreren Steuerausgängen (57, 58) eines Bremsensteuergerätes (15),
- einem ersten Modulausgang (33) zur Verbindung mit zu Leuchten zweiter Art führenden Leitungen (34, 27, 28),
wobei über die Steuereingänge (42, 43) eine Verbindung zwischen dem ersten Moduleingang (36) und dem ersten Modulausgang (33) oder zwischen dem zweiten Moduleingang (37) und dem ersten Modulausgang (33) schaltbar ist.

6. Ansteuerungsmodul nach Anspruch 5, **gekennzeichnet durch**
- einen dritten Moduleingang (38) zur Verbindung mit einem dritten Schnittstellenausgang (31) der Abzweigschnittstelle (14) und
- einen zweiten Modulausgang (46) zur Verbindung mit dem Bremsensteuergerät (15),
wobei der dritte Moduleingang (38) und der zweite Modulausgang (46) verbunden sind, und wobei der zweite Modulausgang (46) als bremslichtabhängige Spannungsversorgung für das Bremsensteuergerät (15) vorgesehen ist.

7. Ansteuerungsmodul nach Anspruch 5 oder 6, **gekennzeichnet durch** ein oder mehrere Relais (40, 41) zum Schalten der Verbindung zwischen erstem Moduleingang (36) und erstem Modulausgang (33) sowie zwischen zweitem Moduleingang (37) und erstem Modulausgang (33).

8. Ansteuerungsmodul nach Anspruch 7, **dadurch gekennzeichnet, dass** zwei Relais (40, 41) durch das Bremsensteuergerät (15) ansteuerbar sind, wobei das eine Relais (41) eine Verbindung vom ersten Moduleingang (36) zum ersten Modulausgang (33) schaltet und das andere Relais (40) eine Verbindung vom zweiten Moduleingang (37) zum erstgenannten Relais (41) schaltet.

9. Ansteuerungsmodul nach Anspruch 7, **dadurch gekennzeichnet, dass** ein Relais (41) durch das Bremsensteuergerät (15) ansteuerbar ist und zwischen einer Verbindung vom ersten Moduleingang (36) zum ersten Modulausgang (33) und einer Verbindung von einem anderen Relais (40) zum ersten Modulausgang (33) schaltet, und dass das andere Relais (40) über den ersten Moduleingang (36) angesteuert wird und eine Verbindung vom zweiten Moduleingang (37) zum zuerst genannten Relais (41) schaltet.

10. Ansteuerungsmodul nach einem der Ansprüche 5 bis 9, **gekennzeichnet durch** einen Versorgungseingang (44) zum Anschluss einer externen Spannungsquelle (45).

11. Ansteuerungsmodul nach Anspruch 10, **dadurch gekennzeichnet, dass** der Versorgungseingang (44) mit einem zweiten Modulausgang (46) verbunden ist, so dass bei Anschluss einer Spannungsquelle (45) an den Versorgungseingang (44) eine Versorgungsspannung am zweiten Modulausgang (46) anliegt oder auf den Modulausgang (46) aufschaltbar ist, wobei der zweite Modulausgang (46) zur Verbindung mit dem Bremsensteuergerät (15) vorgesehen ist.

12. Ansteuerungsmodul nach Anspruch 11, **gekennzeichnet durch** ein Versorgungs-Relais (50) zum Aufschalten des Versorgungseingangs(44) auf den zweiten Modulausgang (46) zur Verbindung mit dem Bremsensteuergerät (15).

13. Ansteuerungsmodul nach Anspruch 12, **gekennzeichnet durch** einen Relaisversorgungseingang (51), nämlich zur Verbindung mit einem spannungführenden Ausgang (56) des Bremsensteuergerätes (15), wobei das Versorgungs-Relais (50) durch Spannung am Relaisversorgungseingang (51) schaltbar ist.

14. Ansteuerungsmodul nach Anspruch 13, **gekennzeichnet durch** eine Diode (52) zwischen dem Relaisversorgungseingang (51) und dem Versorgungs-Relais (50), zur Verhinderung einer Bestromung des Relaisversorgungseingangs (51).

15. Ansteuerungsmodul nach einem der Ansprüche 10 bis 13, **dadurch gekennzeichnet, dass** der Versorgungseingang (44) mit dem dritten Moduleingang (38) und dem zweiten Modulausgang (46) verbunden ist.

16. Ansteuerungsmodul nach Anspruch 15, **dadurch gekennzeichnet, dass** durch Dioden (48, 49) ein Stromfluss vom Versorgungseingang (44) zum dritten Moduleingang (38) und vom dritten Moduleingang (38) zum Versorgungseingang (44) verhindert wird.

17. Lichtanlage für ein Fahrzeug, mit einer Verkabelung (10) nach einem der Ansprüche 1 bis 4.

18. Lichtanlage nach Anspruch 17, **dadurch gekennzeichnet, dass** als Leuchten zweiter Art wenigstens eine der nachfolgenden Leuchten vorgesehen ist:
- Spurhalteleuchten,
- Positionsleuchten,
- Warnleuchten,
- Umrissleuchten (25, 26).

19. Elektronisches Bremssystem für Fahrzeuge, mit elektronischem Bremsensteuergerät (15), welches eingerichtet ist zum Anschluss an eine Verkabelung (10) nach einem der Ansprüche 1 bis 4.

20. Elektronisches Bremssystem nach Anspruch 19, mit einem Ansteuerungsmodul (32) nach einem der Ansprüche 5 bis 16.

21. Elektronisches Bremssystem nach Anspruch 19 oder 20, **dadurch gekennzeichnet, dass** Bremsensteuergerät (15) und Leuchten (25, 26) zweiter Art zumindest beim Ansteuern der letzteren durch das Bremsensteuergerät (15) galvanisch getrennt sind.

22. Elektronisches Bremssystem nach einem der Ansprüche 19 bis 21, **dadurch gekennzeichnet, dass** das Ansteuerungsmodul (32) eine Relaisfunktion enthält, wobei das Bremsensteuergerät (15) mittels der Relaisfunktion eine Verbindung von einem Versorgungseingang (44) des Ansteuerungsmoduls (32) zum Bremsensteuergerät (15) trennen kann.

23. Elektronisches Bremssystem nach Anspruch 20, **dadurch gekennzeichnet, dass** das Ansteuerungsmodul (32) in das Bremsensteuergerät (15) integriert ist.

24. Fahrzeug mit einer Verkabelung (10) nach einem der Ansprüche 1 bis 4, einer Lichtanlage nach einem der Ansprüche 17 bis 18 und einem elektronischen Bremssystem nach einem der Ansprüche 19 bis 23.

25. Anhängefahrzeug mit einer Verkabelung (10) nach einem der Ansprüche 1 bis 4, einer Lichtanlage nach einem der Ansprüche 17 bis 18 und einem elektronischen Bremssystem nach einem der Ansprüche 19 bis 23.
